# EUROPEAN PATENT APPLICATION

(11) **EP 3 023 887 A1**
(43) Date of publication of application: **25.05.2016**
(21) Application number: 14195960.1
(22) Date of filing: 02.12.2014
(51) Int. Cl.: G06F 17/30

(54) **Apparatus, method and medium for recommending contextual information**

(30) Priority: 21.11.2014 TW 103140396
(71) Applicant: Institute for Information Industry, Taipei (TW)
(72) Inventor: Shih, Meng-Jung, Guishan Township / Taoyuan County (TW); Wu, Chia-Chi, Taipei City (TW); Lin, Ting-Chia, Taichung City (TW); Chen, Yi-Chun, Zhongli City / Taoyuan County (TW); Hsieh, Pei-Yu, New Taipei City (TW); Chan, Ya-Hui, Magong City / Penghu County (TW); Lin, Grace, Hualien City / Hualien County (TW)
(74) Representative: Michalski Hüttermann & Partner Patentanwälte mbB

(57) **Abstract**

An electronic calculating apparatus, a method and a non-transitory machine-readable medium are provided. The electronic calculating apparatus includes an input/output (I/O) interface, a knowledge tree database and a processor. The I/O interface receives first data of a user, wherein the first data is comprised of a natural language character string. The knowledge tree database stores a context knowledge tree. The processor receives the first data of the user via the I/O interface, analyzes the first data and generates context characteristic information, and substitutes the context characteristic information into the context knowledge tree to generate first context recommend information. The processor then enables a display apparatus to display the first context recommend information.

## Description

### CROSS-REFERENCES TO RELATED APPLICATIONS

Not applicable.

### BACKGROUND OF THE INVENTION

### Field of the Invention

The present invention relates to an electronic calculating apparatus, a method thereof and a non-transitory machine-readable medium thereof for sensing context and recommending information. More specifically, the electronic calculating apparatus of the present invention can analyze a natural language character string inputted by a user to provide the user with information that complying with a context desired by the user.

### Descriptions of the Related Art

The artificial intelligence (AI) refers to an intelligent system that achieves a judgment mechanism similar to that of human beings on the basis of the surrounding environment. Nowadays, the artificial intelligence is used more and more widely, and especially, is used in a retrieval system to make retrieval results obtained by the retrieval system more humanized. However, the current retrieval systems generally extract keywords from the text inputted by the user and then perform the retrieving simply according to the keywords. However, with such a retrieving manner, the user usually has to additionally filter the information retrieved.

The current retrieval systems may also recommend products similar to those retrieved in the past according to the browsing history or the usage record of the user. However, when the habits of the user have changed, the systems can not immediately provide the user with information needed by the user at the moment. Accordingly, there is an urgent need in the art to provide a more humanized intelligent retrieving manner.

### SUMMARY OF THE INVENTION

An objective of the present invention is to provide an electronic calculating apparatus, a method thereof and a non-transitory machine-readable medium thereof for sensing context and recommending information, which can provide humanized information through judging the current context of a user.

To achieve the aforesaid objective, the present invention discloses an electronic calculating apparatus for sensing context and recommending information, which comprises an input/output (I/O) interface, a knowledge tree database and a processor. The I/O interface is configured to receive first data of a user, where the first data is comprised of a natural language character string. The knowledge tree database is configured to store a context knowledge tree. The processor is electrically connected with the I/O interface and the knowledge tree database respectively and is configured to receive the first data of the user via the I/O interface, analyze the first data and generate context characteristic information, substitute the context characteristic information into the context knowledge tree to provide first context recommend information, and enable a display apparatus to display the first context recommend information.

To achieve the aforesaid objective, the present invention further discloses a method for sensing context and recommending information for an electronic calculating apparatus. The electronic calculating apparatus comprises an I/O interface, a knowledge tree database and a processor electrically connected with the I/O interface and the knowledge tree database respectively. The knowledge tree database stores a context knowledge tree. The method comprises the following steps of: enabling the I/O interface to receive first data of a user, where the first data is comprised of a natural language character string; enabling the processor to analyze the first data and generate context characteristic information; enabling the processor to substitute the context characteristic information into the context knowledge tree to provide first context recommend information; and enabling the processor to enable a display apparatus to display the first context recommend information.

To achieve the aforesaid objective, the present invention provides a non-transitory machine-readable medium which has a plurality of codes stored therein. When the plurality of codes are loaded into an electronic calculating apparatus, the codes are executed by the electronic calculating apparatus to accomplish a method for sensing context and recommending information. The electronic calculating apparatus comprises a context knowledge tree, and the codes comprise: a code A for enabling the electronic calculating apparatus to receive first data of a user, wherein the first data is comprised of a natural language character string; a code B for enabling the electronic calculating apparatus to analyze the first data and generate context characteristic information; a code C for enabling the electronic calculating apparatus to substitute the context characteristic information into the context knowledge tree to provide first context recommend information; and a code D for enabling the electronic calculating apparatus to enable a display apparatus to display the first context recommend information.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** is a block diagram of an electronic calculating apparatus according to a first embodiment of the present invention;
**FIG. 1B** is a schematic view illustrating a context knowledge tree according to the first embodiment of the present invention;
**FIG. 1C** is a schematic view illustrating sub-trees of a context knowledge tree according to the first embodiment of the present invention;
**FIG. 2** is a block diagram of an electronic calculating apparatus according to a second embodiment of the present invention;
**FIG. 3** is a flowchart diagram of a method for sensing context and recommending information according to a third embodiment of the present invention; and
**FIG. 4** is a flowchart diagram of a method for sensing context and recommending information according to a fourth embodiment of the present invention.

### DESCRIPTION OF THE PREFERRED EMBODIMENT

Hereinbelow, the present invention will be explained with reference to embodiments thereof. It should be appreciated that, the embodiments of the present invention are not intended to limit the present invention to any specific environment, applications or implementations as described in these embodiments. Therefore, description of these embodiments is only for purpose of illustration rather than to limit the present invention, and the scope of this application shall be governed by the claims. In addition, in the following embodiments and drawings, elements not directly related to the present invention are omitted from depiction; and dimensional relationships among individual elements in the following drawings are illustrated only for ease of understanding but not to limit the actual scale.

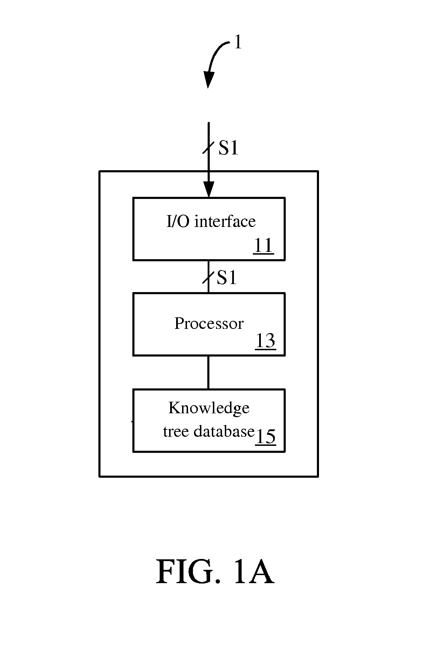

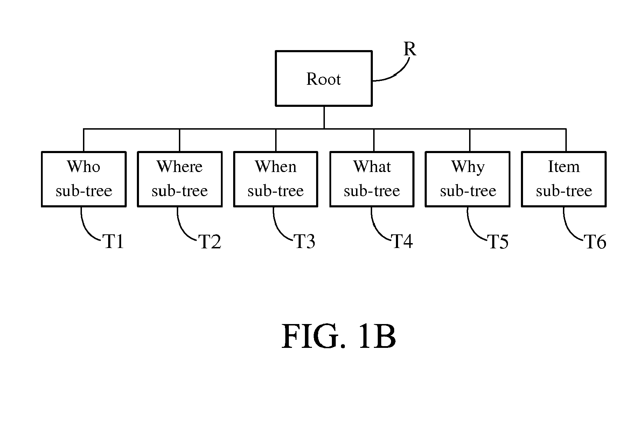

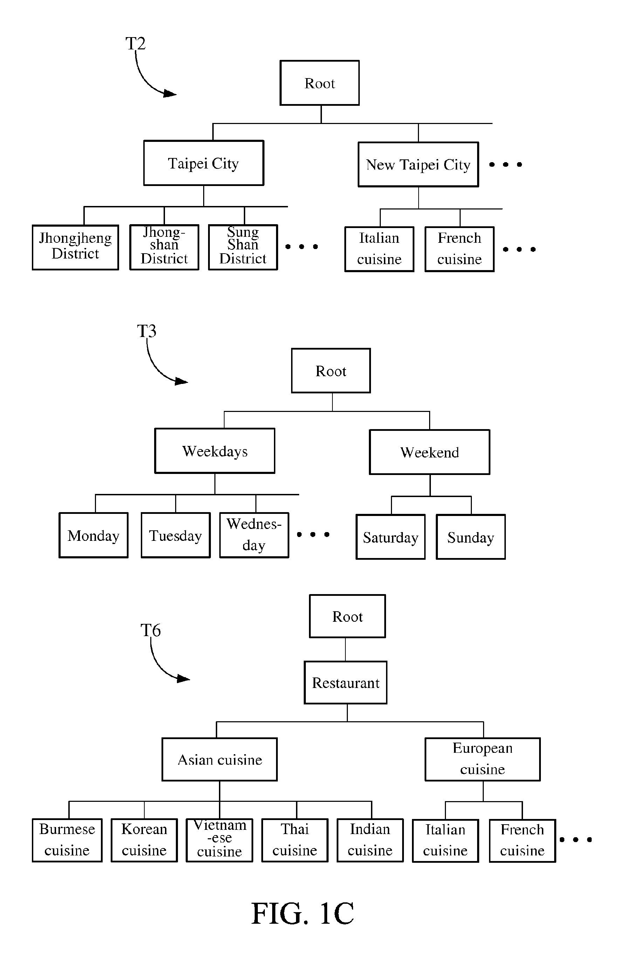

A first embodiment of the present invention is as shown in **FIG. 1A****,** **FIG. 1B** and **FIG. 1C****.** **FIG. 1A** depicts a block diagram of an electronic calculating apparatus **1,** **FIG. 1B** depicts a schematic view illustrating a context knowledge tree, and **FIG. 1C** depicts a schematic view illustrating sub-trees of a context knowledge tree. The electronic calculating apparatus **1** of the present invention is configured to sense context and recommend information, and the recommend information provided by the electronic calculating apparatus **1** may be restaurant recommend information, shopping recommend information, travel recommend information or the like.

The electronic calculating apparatus **1** is a webpage server, a remote server, a desktop computer, a notebook computer, a tablet computer, a smart phone, or some other electronic calculating apparatus that has a calculating function, and comprises an I/O interface **11,** a processor **13** and a knowledge tree database **15.** The processor **13** is electrically connected with the I/O interface **11** and the knowledge tree database **15** respectively. The knowledge tree database **15** stores a context knowledge tree **T.**

The context knowledge tree **T** defines the overall life information and classifies and collects the overall life information in the form of a tree. The context knowledge tree **T** may be defined according to the application field and problems concerned, and may be constructed by experts or a known knowledge tree may be directly invoked. As shown in **FIG. 1B****,** the context knowledge tree **T** may comprise a root **R** and six sub-trees **T1∼T6**, which are respectively a Who sub-tree **T1**, a Where sub-tree **T2,** a When sub-tree **T3,** a What sub-tree **T4,** a Why sub-tree **T5** and an Item sub-tree **T6.** The six sub-trees are six context categories that are set by the present invention. However, the number and contents of the sub-trees of the context knowledge tree **T** are not limited thereto and may be set as needed.

A user may directly operate on the electronic calculating apparatus **1** via the I/O interface **11** in order to query data he or she wants to obtain. In this case, the I/O interface **11** is a keyboard, a mouse, a voice input system or the like, and a display apparatus (not shown) of the electronic calculating apparatus **1** displays a user interface.

Or, the user may connect a personal electronic apparatus with the electronic calculating apparatus of the present invention via the I/O interface **11.** In this case, the I/O interface **11** is such a communication interface as a network interface, a USB interface or the like, and a display apparatus of the personal electronic apparatus displays a user interface.

Firstly, the user inputs first data **S1** in the user interface, the processor **13** receives the first data **S1** via the I/O interface **11,** and the first data **S1** is comprised of a natural language character string. For example, the first data **S1** inputted by the user may be "I want to look for an Italian cuisine in Sung Shan District during the weekend", and the content of the information is displayed in the form of the natural language character string.

Afterwards, the processor **13** analyzes the first data **S1** to obtain context characteristic information through inference. The inference is made as followings: also in the aforesaid example, the processor **13** firstly analyzes the first data **S1**. The analysis is made in a conventional way of analyzing a natural language, that is, by comparing key words, segmenting the words, and comparing synonyms with the content of the context knowledge tree for the content "I want to look for an Italian cuisine in Sung Shan District during the weekend", and then data complying with the attributes of the aforesaid six sub-trees **T1∼T6** are obtained through inference and analysis. The attributes are respectively "Who, Where, When, What, Why and Item". After the analysis, the context characteristic information can be obtained. Also in the aforesaid example, the context characteristic information comprises "When: weekend", "Where: Sung Shan District" and "Item: Italian cuisine".

The context characteristic information may be shown as the following Table 1:

| Who | Where | When | What | Why | Item |
|---|---|---|---|---|---|
| | Sung Shan District | Weekend | | | Italian cuisine |

It should be appreciated that, the user may not provide data that comply with the attributes of all the sub-trees **T1∼T6**, so some fields in Table 1 are empty.

Afterwards, the context characteristic information is substituted into the context knowledge tree **T.** The processor **13** may firstly retrieve information from the Item sub-tree **T6,** that is, find an Italian cuisine node along a Restaurant node and an European cuisine node and then retrieve information (e.g., comprising a W restaurant, an X restaurant, a Y restaurant and a Z restaurant) under the Italian cuisine node, as shown in **FIG. 1C****.**

Then, the data corresponding to other attributes in the context characteristic information is used to assist in the subsequent data retrieval, and here, the data corresponding to other attributes refers to the content of the context characteristic information that corresponds to the Where sub-tree **T2** and the When sub-tree **T3.** For example, the W restaurant, the X restaurant, the Y restaurant and the Z restaurant in the context knowledge tree T have been defined, among which the X restaurant, the Y restaurant, and the Z restaurant are located in Sung Shan District while the W restaurant is located in New Taipei City. Because the X restaurant, the Y restaurant, and the Z restaurant correspond to a Sung Shan District node under a Taipei City node in the Where sub-tree **T2,** the processor **13** further keeps the X restaurant, the Y restaurant, and the Z restaurant and excludes the W restaurant.

Furthermore, the context characteristic information further comprises information corresponding to a weekend node under the time sub-tree **T3.** Assume that the Y restaurant and the Z restaurant are both defined as restaurants suitable for the weekend and the X restaurant is a restaurant suitable for the workdays. Then the processor **13** excludes the X restaurant and keeps the Y restaurant and the Z restaurant that comply with the user's need as the first context recommend information.

It should be appreciated that, the nodes and content of the Who sub-tree **T1**, the What sub-tree **T4** and the Why sub-tree **T5** may be designed by the system developer as needed, so they will not be further described herein.

After having obtained the first context recommend information, the processor **13** enables a display apparatus (not shown) to display the first context recommend information and display the information related to the Y restaurant and the Z restaurant. The display apparatus is a display of the electronic calculating apparatus **1,** or a display of the aforesaid personal electronic apparatus.

It should be appreciated that, the first context recommend information may satisfy the needs of the user at the moment, so the searching of the user may be ended.

However, the user may want a searching result that better satisfy the needs thereof. In this case, the user may input second data **S2** (e.g., "500-1000 for each person") into a "further retrieving" box displayed on the user interface by the processor **13.** The second data **S2** may also be a natural language character string.

After having received the second data **S2,** which is inputted by the user in response to the first context recommend information, via the I/O interface **11,** the processor **13** adjusts the first context recommend information. Still in the aforesaid example, the processor **13** analyzes the above second data **S2** and limits the price to a level of 15-30 dollars. Therefore, the processor **13** excludes those not conforming to the second data **S2** from the restaurant list shown by the first context recommend information, or only selects those better conforming to the second data **S2** to generate second context recommend data. Still in the aforesaid example, assume that the price for each person of the Y restaurant and the Z restaurant are respectively 10 dollars and 25 dollars. Therefore, the processor **13** will exclude the Y restaurant and keep the Z restaurant, and take the data of the Z restaurant as the second context recommend data. Afterwards, the processor **13** enables the display apparatus to display the second context recommend data.

In another implementation, the processor **13** may also pose a system question to the user before receiving the second data **S2.** Also in the aforesaid example, the processor **13** enables the display apparatus to display a system question (e.g., "how much is your preset price?") corresponding to the context recommend information, or list a plurality of options for the user to choose therefrom, for example, provide options "the preset price is below 15 dollars", "the preset price is 15-30 dollars" and "the preset price is above 30 dollars" for the user to choose therefrom. Accordingly, the user gives the aforesaid second data **S2,** and the processor **13** adjusts the first context recommend information in the aforesaid manner to obtain the aforesaid second context recommend information.

It should be appreciated that, if the user has obtained enough information, then it is unnecessary to respond with the second data **S2.**

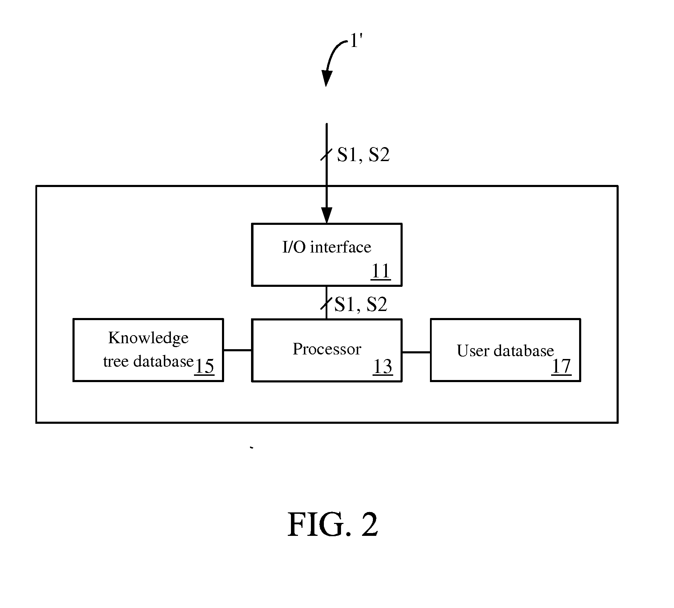

A second embodiment of the present invention is shown in **FIG. 2****,** which depicts a block diagram of an electronic calculating apparatus **1'.** The electronic calculating apparatus **1'** comprises an I/O interface **11,** a processor **13,** a knowledge tree database **15** and a user database **17.** The processor **13** is electrically connected with the I/O interface **11,** the knowledge tree database **15** and the user database **17** respectively.

The knowledge tree database **15** and the user database **17** may exist in a same storage, which may be a hard disk, a USB storage device or some other non-volatile storage device. Of course, the knowledge tree database **15** and the user database **17** may also exist in different storages.

It should be appreciated that, the I/O interface **11,** the processor **13,** and the knowledge tree database **15** of this embodiment are the same as the I/O interface **11,** the processor **13,** and the knowledge tree database **15** of the first embodiment in terms of the functions and the attributes, so they will not be further described herein.

The user database **17** is configured to store user data, such as data browsed on webpages in the past, usage data, purchasing records and data collected from external networks (e.g., a social networking website, a forum, a blog and etc.) and etc.

In this embodiment, the processor **13** obtains the first context recommend information in almost the same manner as the first embodiment. This embodiment differs from the first embodiment in that, the processor **13** obtains the context recommend information by substituting the context characteristic information and the user data into the knowledge tree database.

Still as illustrated in the first embodiment, the user database **17** has the data that "the user is an unmarried male aged 20-30" stored therein, so the user information is "Who: 20-30 years old, unmarried, male".

Accordingly, the processor **13** of this embodiment substitutes the context characteristic information (i.e., "When: weekend", "Where: Sung Shan District", and "Item: Italian cuisine") and the user data (i.e., "Who: 20-30 years old, unmarried, male") into the context knowledge tree to provide first context recommend information. Then, the processor **13** determines from the data searched by the user that the first context recommend information must satisfy the needs of unmarried males aged 20-30 (e.g., defines the first context recommend information as restaurants that are more romantic in the context knowledge tree). Therefore, the first context recommend information generated in this embodiment is a list of Italian restaurants that are more romantic and located in Sung Shan District. Thereby, the first context recommend information of this embodiment conforms to the personal characteristics of the user in a better way than that of the first embodiment.

The user database **17** of the electronic calculating apparatus **1'** of this embodiment has the user data stored therein. Therefore, the processor **13** also stores the first data **S1** inputted this time by the user into the user database **17** simultaneously when the user performs the aforesaid retrieving of restaurants so that the first data **S1** may be used as the user data to be substituted into the context knowledge tree in a next retrieval of the user.

It should be appreciated that, the electronic calculating apparatus **1'** of the second embodiment can also execute all the operations and have all the functions of the electronic calculating apparatus **1** of the first embodiment. Because how the electronic calculating apparatus of the second embodiment executes these operations and have these functions can be readily known by those of ordinary skill in the art based on the aforesaid first embodiment, this will not be further described herein.

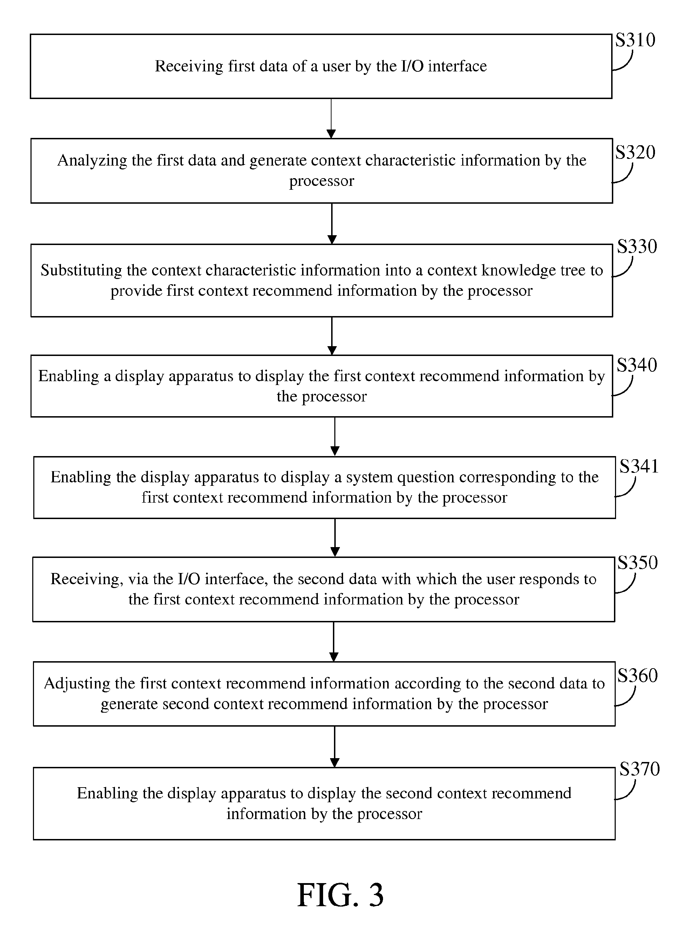

A third embodiment of the present invention is a method for sensing context and recommending information, a flowchart diagram of which is shown in **FIG. 3****.** The method for sensing context and recommending information is suitable for use in an electronic calculating apparatus (e.g., the electronic calculating apparatus **1** described in the first embodiment).

The electronic calculating apparatus is a webpage server, a remote server, a desktop computer, a notebook computer, a tablet computer, a smart phone or some other electronic calculating apparatus that has a calculating function, and comprises an I/O interface, a processor and a knowledge tree database. The processor is electrically connected with the I/O interface and the knowledge tree database respectively. The knowledge tree database stores a context knowledge tree.

The context knowledge tree defines the overall life information, and classifies and collects the overall life information in the form of a tree.

A user may directly operate on the electronic calculating apparatus via the I/O interface in order to query data that he or she desires to obtain. In this case, the I/O interface is a keyboard, a mouse, a voice input system or the like, and a display apparatus of the electronic calculating apparatus displays a user interface.

Or, the user may connect a personal electronic apparatus with the electronic calculating apparatus of the present invention via the I/O interface. In this case, the I/O interface is such a communication interface as a network interface, a USB interface or the like, and a display apparatus of the personal electronic apparatus displays a user interface.

Firstly, in the method for sensing context and recommending information, a step **S310** is executed by the I/O interface to receive first data of a user, where the first data is comprised of a natural language character string.

Then, a step **S320** is executed by the processor to analyze the first data and generate context characteristic information. Next, a step **S330** is executed by the processor to substitute the context characteristic information into the context knowledge tree to provide first context recommend information.

Finally, a step **S340** is executed by the processor to enable a display apparatus to display the first context recommend information. It should be appreciated that, the first context recommend information may have already satisfied the needs of the user at the moment, so the searching of the user may be ended.

However, the user may want a searching result that better satisfies the needs thereof. In this case, the user may input second data into a "further retrieving" box displayed on a user interface by the processor. The second data may also be a natural language character string.

Therefore, a step **S350** is executed by the processor to receive, via the I/O interface, the second data with which the user responds to the first context recommend information.

Next, a step **S360** is executed by the processor to adjust the first context recommend information according to the second data to generate second context recommend information. Then, a step **S370** is executed by the processor to enable the display apparatus to display the second context recommend information.

In another implementation, the processor may also pose a system question to the user before receiving the second data. The user gives the aforesaid second data and the processor adjusts the first context recommend information to obtain the aforesaid second context recommend information.

Therefore, a step **S341** is executed by the processor to enable the display apparatus to display a system question corresponding to the first context recommend information so that the user answers the system question with the aforesaid second data.

It should be appreciated that, if the user has obtained enough information, then it is unnecessary to respond with the second data.

In addition to the aforesaid steps, the method for sensing context and recommending information of the third embodiment can also execute all the operations and have all the functions of the electronic calculating apparatus of the first embodiment. Because how the method for sensing context and recommending information of the third embodiment executes these operations and have these functions can be readily known by those of ordinary skill in the art based on the aforesaid first embodiment, it will not be further described herein.

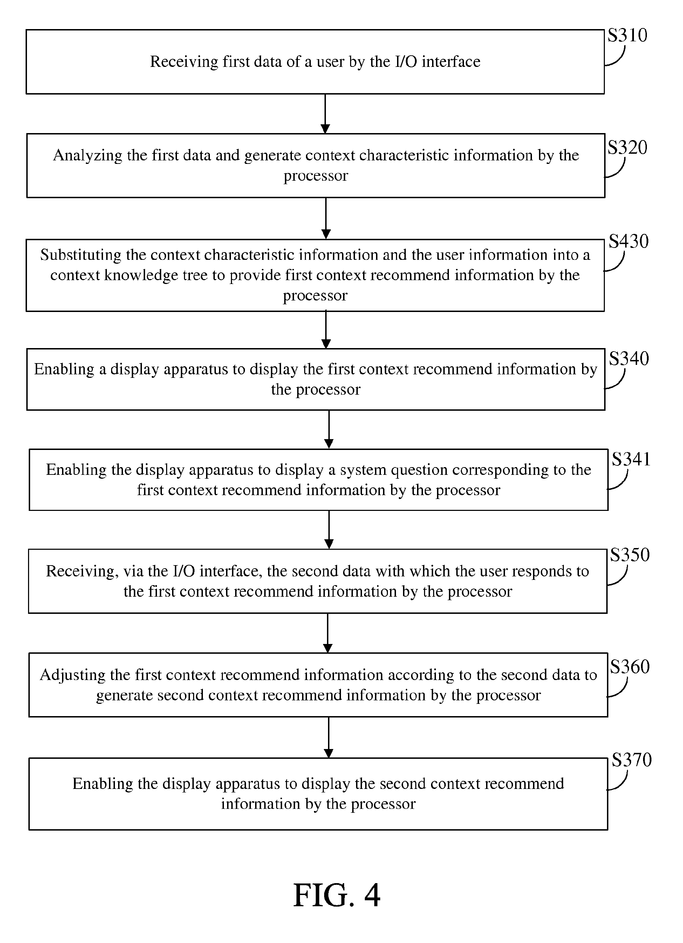

A fourth embodiment of the present invention is a method for sensing context and recommending information, a flowchart diagram of which is depicted in **FIG. 4****.** The method for sensing context and recommending information is suitable for use in an electronic calculating apparatus (e.g., the electronic calculating apparatus **1** described in the first embodiment).

The electronic calculating apparatus is a webpage server, a remote server, a desktop computer, a notebook computer, a tablet computer, a smart phone or some other electronic calculating apparatus that has a calculating function, and comprises an I/O interface, a processor, a knowledge tree database and a user database. The processor is electrically connected with the I/O interface, the knowledge tree database and the user database respectively.

The knowledge tree database stores a context knowledge tree. The knowledge tree database and the user database may exist in a same storage, which may be a hard disk, a USB storage device or some other non-volatile storage device. Of course, the knowledge tree database and the user database may also exist in different storages.

The user database comprises user data, such as data browsed on webpages in the past, usage data, purchasing records and data collected from external networks (e.g., a social networking website, a forum, a blog and etc.) and etc.

It should be appreciated that, the I/O interface, the processor, the knowledge tree database and the user database of this embodiment are the same as the I/O interface, the processor, the knowledge tree database and the user database of the third embodiment in terms of the functions and attributes, so they will not be further described herein.

The method for sensing context and recommending information of this embodiment is generally the same as the method for sensing context and recommending information of the third embodiment.

However, this embodiment differs from the third embodiment in that, this embodiment determines the first context recommend information further according to the user data. Therefore, in the method for sensing context and recommending information described in this embodiment, a step **S430** is executed by the processor to substitute the context characteristic information and the user information into the knowledge tree database to provide first context recommend information. Other steps of this embodiment are the same as those described in the third embodiment, so they will not be further described herein.

In addition to the aforesaid steps, the method for sensing context and recommending information of the fourth embodiment can also execute all the operations and have all the functions of the electronic calculating apparatus of the second embodiment. Because how the method for sensing context and recommending information of the fourth embodiment executes these operations and have these functions can be readily known by those of ordinary skill in the art based on the aforesaid second embodiment, it will not be further described herein.

Furthermore, the methods for sensing context and recommending information described in the third embodiment and the fourth embodiment may be implemented by a non-transitory machine-readable medium respectively. When a plurality of codes stored in the non-transitory machine-readable medium are loaded into an electronic calculating apparatus, the plurality of codes are executed by the electronic calculating apparatus to accomplish the methods for sensing context and recommending information described in the third embodiment and the fourth embodiment respectively. The aforesaid non-transitory machine-readable medium may be a file that can be transmitted in a network, or may be stored in a non-volatile computer readable recording medium, such as a read only memory (ROM), a flash memory, a floppy disk, a hard disk, a compact disk (CD), a mobile disk, a magnetic tape, a database accessible to networks, or any other storage media with the same function and well known to those skilled in the art.

The recommend information provided by the present invention can better conform to the context desired by the user. As compared to the prior art, the retrieving manner of the present invention can satisfy the needs of the user in a more humanized way and further apply the artificial intelligence in data retrieving.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. An electronic calculating apparatus (1) for sensing context and recommending information, comprising:
an input/output (I/O) interface (11), being configured to receive first data (S1) of a user, wherein the first data (S1) is comprised of a natural language character string;
a knowledge tree database (15), being configured to store a context knowledge tree; and
a processor (13) electrically connected with the I/O interface (11) and the knowledge tree database (15) respectively, being configured to receive the first data (S1) of the user via the I/O interface (11), analyze the first data (S1) and generate context characteristic information, substitute the context characteristic information into the context knowledge tree to provide first context recommend information, and enable a display apparatus to display the first context recommend information.

2. The electronic calculating apparatus (1) of claim 1, further comprising a user database (17) electrically connected with the processor (13), wherein the user database (17) comprises user data;
wherein the operation of substituting the context characteristic information into the context knowledge tree to provide the first context recommend information by the processor (13) is as follows:
the processor (13) substitutes the context characteristic information and the user data into the context knowledge tree to provide the first context recommend information.

3. The electronic calculating apparatus (1) of claim 1 or 2, wherein the processor (13) is further configured to receive, via the I/O interface (11), second data (S2) with which the user responds to the first context recommend information, adjust the first context recommend information according to the second data (S2) to generate second context recommend data, and enable the display apparatus to display the second context recommend data.

4. The electronic calculating apparatus (1) of claim 3, wherein the processor (13) is further configured to enable the display apparatus to display a system question corresponding to the first context recommend information before receiving the second data (S2) so that the user transmits the second data (S2) back via the I/O interface (11).

5. A method for sensing context and recommending information for an electronic calculating apparatus (1), the electronic calculating apparatus (1) comprising an I/O interface (11), a knowledge tree database (15) and a processor (13) electrically connected with the I/O interface (11) and the knowledge tree database (15) respectively, and the knowledge tree database (15) storing a context knowledge tree, the method comprising the following steps of:
receiving first data (S1) of a user by the I/O interface (11), wherein the first data (S1) is comprised of a natural language character string;
analyzing the first data (S1) and generate context characteristic information by the processor (13);
substituting the context characteristic information into the context knowledge tree to provide first context recommend information by the processor (13); and
enabling a display apparatus to display the first context recommend information by the processor (13).

6. The method for sensing context and recommending information of claim 5, wherein the electronic calculating apparatus (1) further comprises a user database (17) electrically connected with the processor (13), the user database (17) comprises user data, and the step of substituting the context characteristic information into the context knowledge tree to provide the first context recommend information by the processor (13) is as follows:
substituting the context characteristic information and the user data into the knowledge tree database (15) to provide the first context recommend information by the processor (13).

7. The method for sensing context and recommending information of claim 5 or 6, further comprising the following steps of:
receiving, via the I/O interface (11), second data (S2) with which the user responds to the first context recommend information by the processor (13);
adjusting the first context recommend information according to the second data (S2) to generate second context recommend information by the processor (13); and
enabling the display apparatus to display the second context recommend information by the processor (13).

8. The method for sensing context and recommending information of claim 7, further comprising the following step of:
enabling the display apparatus to display a system question corresponding to the first context recommend information before receiving the second data (S2) by the processor (13) so that the user transmits the second data (S2) back via the I/O interface (11).

9. A non-transitory machine-readable medium having a plurality of codes stored therein, wherein when the plurality of codes are loaded into an electronic calculating apparatus (1), the plurality of codes are executed by the electronic calculating apparatus (1) to accomplish a method for sensing context and recommending information, the codes comprising:
a code A for enabling the electronic calculating apparatus (1) to receive first data (S1) of a user, wherein the first data (S1) is comprised of a natural language character string;
a code B for enabling the electronic calculating apparatus (1) to analyze the first data (S1) and generate context characteristic information;
a code C for enabling the electronic calculating apparatus (1) to substitute the context characteristic information into the context knowledge tree to provide first context recommend information; and
a code D for enabling the electronic calculating apparatus (1) to enable a display apparatus to display the first context recommend information.

10. The non-transitory machine-readable medium of claim 9, wherein the electronic calculating apparatus (1) further stores user data, and the code C is as follows:
a code C1 for enabling the electronic calculating apparatus (1) to substitute the context characteristic information and the user data into the context knowledge tree to provide the first context recommend information.

11. The non-transitory machine-readable medium of claim 9 or 10, further comprising the following codes:
a code E for enabling the electronic calculating apparatus (1) to receive second data (S2) with which the user responds to the first context recommend information;
a code F for enabling the electronic calculating apparatus (1) to adjust the first context recommend information according to the second data (S2) to generate second context recommend information; and
a code G for enabling the electronic calculating apparatus (1) to enable the display apparatus to display the second context recommend information.

12. The non-transitory machine-readable medium of claim 11, further comprising the following code:
a code H for enabling the electronic calculating apparatus (1) to, before receiving the second data (S2), enable the display apparatus to display a system question corresponding to the first context recommend information so that the user transmits the second data (S2) back to the electronic calculating apparatus (1).
